# EUROPÄISCHE PATENTSCHRIFT

(11) **EP 2 905 882 B1**
(45) Veröffentlichungstag und Bekanntmachung des Hinweises auf die Patenterteilung: **30.03.2022**
(21) Anmeldenummer: 14154469.2
(22) Anmeldetag: 10.02.2014
(51) Int. Cl.: H02K 11/00

(54) **Erfassung eines kinematischen Zustands einer rotierbaren Maschinenkomponente**
Detection of a kinematic condition of a rotatable machine component
Détection d'un état cinématique d'un composant de machine rotatif

(43) Veröffentlichungstag der Anmeldung: 12.08.2015
(73) Patentinhaber: Siemens Aktiengesellschaft, 80333 München (DE)
(72) Erfinder: Büttner, Klaus, 97618 Hollstadt (DE); Mikulec, Dragan, 91052 Erlangen (DE); Warmuth, Matthias, 97618 Windshausen (DE); Zettner, Jürgen, 90587 Veitsbronn (DE)

(56) Entgegenhaltungen:
- EP-A2- 0 377 835
- WO-A1-2013/065737
- DE-A1-102012 205 760
- FR-A1- 2 917 476
- US-A- 5 650 679
- US-A- 5 665 965

## Beschreibung

Die Erfindung betrifft eine Vorrichtung und ein Verfahren zur Erfassung eines kinematischen Zustands einer um eine Rotationsachse rotierbaren Maschinenkomponente einer elektrischen Maschine.

Ein kinematischer Zustand einer rotierbaren Maschinenkomponente einer elektrischen Maschine wird dabei durch eine Rotationsgeschwindigkeit, Rotationsrichtung und/oder Stellung der Maschinenkomponente charakterisiert. Eine rotierbare Maschinenkomponente einer elektrischen Maschine ist beispielsweise ein Rotor der elektrischen Maschine oder ein mit dem Rotor rotierendes Bauteil.

Zur Erfassung und Messung der Rotationsgeschwindigkeit, Rotationsrichtung und Stellung einer derartigen Maschinenkomponente muss ein Gebersystem vorgesehen werden. Hierbei handelt es sich in der Regel um ein aufwändiges und damit kostenintensives Zukaufteil. Im Umrichterbetrieb ist ein solches Gebersystem häufig zwingend notwendig. Ein Drehzahlgeber ist beispielsweise axial auf einer Welle der elektrischen Maschine montiert. Durch solche Anbauten wird die Maschine größer und eine häufig gewünschte, kompakte Bauweise wird erschwert. Angebaute Drehzahlgeber weisen häufig, bedingt durch deren Anbaukonstruktion, Rundlauffehler auf, die wiederum Einfluss auf die Lebensdauer nach sich ziehen. Zudem führen Schwingungen an der Maschine zu Problemen bei der Signalauswertung, was die Genauigkeit des an der Welle montierten Drehzahlgebers einschränkt.

Bekannt sind optische Gebersysteme, die sinusförmige Signale verwenden und zumeist mit einer hohen Auflösung, beispielsweise mit mehr als 1024 Perioden pro Umdrehung, arbeiten. Diese Gebersysteme sind sehr kostenintensiv aufgrund der Maßverkörperung, welche zumeist aus Glas besteht sowie aufgrund des erhöhten Aufwands in der Montage- und Justage. Diese Geber werden oft an das Wellenende angebaut, und durch eine Drehmomentenstütze an ein stehendes Bauteil gegen Mitdrehen gesichert. Das Gebersystem weist eine eigene Lagerung auf und ist in der Drehzahleignung begrenzt. Durch die Anbaukonstruktion ist ein derartiges System mit Rundlauffehlern behaftet, wodurch die Lebensdauer eingeschränkt wird.

Andere Gebersysteme verwenden magnetische Ringe mit einer entsprechenden Anzahl von Nord- und Südpolen. Die Anzahl der Nord- und Südpole innerhalb eines magnetischen Rings ergibt sich durch den Bedarf der "Maßverkörperung", einer gewünschten Polpaarzahl der elektrischen Maschine. Bei diesen Gebersystemen wird das Signalrad auf die Welle fixiert, meistens durch Aufkleben. Durch das Aufkleben ergeben sich Nachteile bei der Montage und Demontage.

Bekannte Resolver arbeiten oft mit montierten, insbesondere geklebten achsumgebenden Messspulen. Diese sind ausfallträchtig, nicht wartungsfreundlich und nicht austauschbar, ohne den Lagerdeckel zu entfernen, und können bei einem Lagerwechsel nicht zwangsläufig wiederverwendet werden, d.h. sind nicht immer zerstörungsfrei tauschbar. Des Weiteren haben Resolver deutliche Nachteile in der Montage wie z.B. das Aufschrumpfen, das Verkabeln und das Ausrichten (die Justierung) bei Synchronmaschinen.

DE 10 2007 060 688 A1 offenbart eine elektrische Maschine mit einem Rotor, der Mittel zur Führung magnetischer Felder und mindestens zwei in axialer Richtung durchgängige Öffnungen aufweist. Zur Bestimmung einer Drehzahl des Rotors sind gegenüberliegend an jeweils einer Stirnseite der elektrischen Maschine ein Sender und ein Empfänger angeordnet, wobei der Sender ein durch die Öffnungen des Rotors übertragbares Signal zu dem Empfänger sendet. Ein derartiges Gebersystem erfordert zwei Einbauorte und lässt sich nur für bestimmte elektrische Maschinen realisieren.

US 5 650 679 A offenbart einen Antrieb für variable Geschwindigkeiten. Dabei kann ein Rotor mit einer äußeren Oberfläche vorgesehen sein, die regelmäßige Kerben aufweist und mittels eines Geschwindigkeitssensors auslesbar ist.

DE 10 2012 205 760 A1 offenbart eine rotierende elektrische Maschine mit den Merkmalen des Oberbegriffs des Anspruchs 1 und mit zumindest einer Funktionskomponente, die aus der Gruppe umfassend eine Wickelkopfabdeckung, ein Wuchtelement und ein Geberrad eines Rotorlagegebers ausgewählt ist.

EP 0 377 835 A2 offenbart eine Vorrichtung zur Rotordrehzahlermittlung eines Elektromotors mit mindestens einer am Rotor angeordneten Signalspur, die von einem mit einer Auswerteschaltung verbundenen Sensor abgetastet wird. Die Signalspur ist derart ausgebildet, dass sie den Sensor alternativ in einen ersten, zweiten oder dritten Zustand versetzt, wobei die einzelnen Zustände unterschiedlich große Pegel erzeugen. FR 2 917 476 A1 offenbart ein instrumentiertes Wälzlager mit einer Vorrichtung zur Erfassung von Rotationsparametern wie einer Winkelposition, Drehrichtung, Geschwindigkeit oder Beschleunigung.

US 5 665 965 A offenbart einen optischen Drehzahlgeber zum Umwandeln einer zyklischen Bewegung einer elektromechanischen Maschine, z. B. eines Elektromotors, in zumindest ein elektrisches Signal mit einer vorbestimmten Wellenform.

WO 2013/065737 A1 betrifft einen optischen Codierer. Der optische Codierer umfasst einen optischen Sensor mit einer optischen Skala, eine Lichtquelle, eine erste Polarisationsschicht, die einfallendes Licht von der Lichtquelle trennt, die eintritt, nachdem sie von der optischen Skala in einer ersten Polarisationsrichtung durchgelassen oder reflektiert wurde, und eine zweite Polarisationsschicht, die das einfallende Licht in einer zweiten Polarisationsrichtung trennt. Der Erfindung liegt die Aufgabe zugrunde, eine verbesserte Vorrichtung und ein verbessertes Verfahren zur Erfassung eines kinematischen Zustands einer rotierbaren Maschinenkomponente einer elektrischen Maschine anzugeben.

Die Aufgabe wird erfindungsgemäß hinsichtlich der Vorrichtung durch die Merkmale des Anspruchs 1 und hinsichtlich des Verfahrens durch die Merkmale des Anspruchs 8 gelöst.

Vorteilhafte Ausgestaltungen der Erfindung sind Gegenstand der Unteransprüche.

Eine erfindungsgemäße Vorrichtung zur Erfassung eines kinematischen Zustands einer um eine Rotationsachse rotierbaren Maschinenkomponente einer elektrischen Maschine umfasst eine fest an der Maschinenkomponente angeordnete oder der Maschinenkomponente eingeprägte Oberflächenstruktur, die kreisringförmig und konzentrisch um einen Bezugspunkt auf der Rotationsachse der Maschinenkomponente verläuft und ein Oberflächenprofil aufweist, das in Abhängigkeit von einem Sektorwinkel, der Richtungen von dem Bezugspunkt zu Punkten auf einem Umfang der Oberflächenstruktur parametrisiert, und/oder von einem Abstand von dem Bezugspunkt variiert. Ferner umfasst die Vorrichtung eine Sensorvorrichtung zur berührungslosen Erfassung des Oberflächenprofils in wenigstens einem bezüglich der Rotationsachse ortfesten Erfassungsgebiet, und eine Auswerteeinheit zur Bestimmung des kinematischen Zustands der Maschinenkomponente anhand des mittels der Sensorvorrichtung in dem wenigstens einen Erfassungsgebiet erfassten Oberflächenprofils.

Durch die Variation des Oberflächenprofils ändert sich während einer Rotation der Maschinenkomponente das Oberflächenprofil in bezüglich der Rotationsachse der Maschinenkomponente ortfesten Gebieten. Wählt man derartige Gebiete als Erfassungsgebiete, in denen das Oberflächenprofil erfasst wird, so können anhand der in den Erfassungsgebieten jeweils erfassten Oberflächenprofile und deren zeitlichen Änderungen die Rotationsgeschwindigkeit, Rotationsrichtung und Stellung der Maschinenkomponente ermittelt werden. Die kreisringförmige Ausbildung der Oberflächenstruktur um die Rotationsachse herum ist dabei den zu erfassenden Rotationsbewegungen und Stellungen der Maschinenkomponente angepasst. Ausgestaltungen des Oberflächenprofils, die sich zur Erfassung des kinematischen Zustands der Maschinenkomponente besonders eignen, werden unten im Einzelnen beschrieben.

Die Oberflächenstruktur kann in Form eines separat gefertigten und fest an der Maschinenkomponente angeordneten Strukturelements oder als eine der Maschinenkomponente eingeprägte oder als eine ohnehin vorhandene Struktur (bei Synchronmaschinen z.B. in Form von Einleg- und/oder Auswuchtscheiben und/oder Lüfterstrukturen) ausgebildet sein. Als Sensorvorrichtung zur berührungslosen Erfassung des Oberflächenprofils können beispielsweise kostengünstige kommerziell verfügbare Abstandssensoren zur Erfassung von Abständen der Sensorvorrichtung von der Oberfläche der Oberflächenstruktur in den Erfassungsgebieten verwendet werden.

Die erfindungsgemäße Vorrichtung ist ein einfaches und kostengünstiges Gebersystem zur Erfassung eines kinematischen Zustands der Maschinenkomponente, das lediglich eine geeignete Oberflächenstruktur und eine diese erfassende und von der Maschinenkomponente getrennte Sensorvorrichtung sowie eine Auswerteeinheit umfasst. Dies ermöglicht eine kompakte und somit Bauraum sparende Ausführung des Gebersystems und sieht insbesondere kein an der Maschinenkomponente oder an einer Welle der elektrischen Maschine angeordnetes komplexes Drehgebersystem vor, das kostenintensiv ist, hohen Montage- oder Wartungsaufwand erfordert oder die Rotationseigenschaften der Maschinenkomponente beeinträchtigt. Das erfindungsgemäße Gebersystem eignet sich außerdem auch für hohe Drehzahlen von mehr als 20000 rpm, da es prinzipbedingt keine eigene Lagerung benötigt, und ermöglicht ein einfaches Service- und Wartungskonzept, da die Oberflächenstruktur praktisch keine Wartung erfordert und die Sensorvorrichtung unabhängig von der Maschinenkomponente ausgetauscht werden kann. Das erfindungsgemäße Gebersystem eignet sich insbesondere für Anwendungen in der Elektromobilität.

Die erfindungsgemäße Vorrichtung ersetzt somit die Funktionalitäten von achsnah, auf eine Achse gepressten (schwierig austauschbaren) Resolvern bei ausreichend genauer Messempfindlichkeit, wobei sogar eine Justierung im Werk vermieden werden kann. Die Vorrichtung kann insbesondere ideal zu einer elektrischen Phase eines Rotors angeordnet werden, ohne dass eine extern anzubringende Maßverkörperung wie bei herkömmlichen Encodern benötigt wird. Ferner kann im Vergleich zu an einem Wellenende angebauten Gebersystem das Wellenende für andere Anbauten oder zum Abtrieb genutzt werden. Die Drehzahleignung wird durch Maschinenkomponenten begrenzt und nicht durch Komponenten eines Gebersystems. Im erfindungsgemäßen Gebersystem wirken ferner keine unerwünschten Lagerströme, die durch ein Potential zwischen dem Stator und dem Rotor verursacht werden, da das Gebersystem keine elektrische Verbindung mit dem Rotor oder Stator und keine Lagerung benötigt.

Die Erfindung sieht vor, dass das Oberflächenprofil wenigstens eine periodische Kreisringspur aufweist, die kreisringförmig und konzentrisch um den Bezugspunkt verläuft und entlang derer das Oberflächenprofil in Abhängigkeit von dem Sektorwinkel periodisch mit einer Winkelperiode der periodischen Kreisringspur variiert.

Eine derartige periodische Kreisringspur ermöglicht vorteilhaft die Erzeugung eines periodischen Messsignals, aus dessen Frequenz in einfacher Weise eine Rotationsgeschwindigkeit der Maschinenkomponente ermittelt werden kann.

Die Erfindung sieht weiter vor, dass das Oberflächenprofil wenigstens einer periodischen Kreisringspur sinusförmig mit dem Sektorwinkel variiert.

Eine sinusförmige Kreisringspur ermöglicht ein zumindest annähernd sinusförmiges Messsignal. Derartige Messsignale sind besonders vorteilhaft, da sie nur geringe Oberwellen aufweisen. Außerdem ist die Anlage sinusförmiger Oberflächenprofile gerade bei Gussformen, wie z. B. einem Kurzschlussring eines Rotors oder gegossenen Endscheiben für elektrische Maschinen, vorteilhaft für die Entformung im Gießprozess. Sinusförmige Spuren können ferner großräumiger als einfache Tiefenprofile zur Erzeugung von Messimpulsen gestaltet werden und dennoch, durch gute Interpolierbarkeit bei analoger Abtastung, zu einer besseren (Winkel-) Auflösung als einfache Tiefenprofile führen und mithin auch bei niedrigen Drehzahlen zur Drehzahlsteuerung genutzt werden.

Die Erfindung sieht wenigstens eine periodische Kreisringspur vor, in deren Gebiet zwei Erfassungsgebiete liegen, die unterschiedliche Abstände zu dem Bezugspunkt aufweisen und um ein Viertel der Winkelperiode der periodischen Kreisringspur gegeneinander versetzt sind.

Durch den gegenseitigen Versatz der beiden Erfassungsgebiete lässt sich aus dem entsprechenden Versatz der in diesen Erfassungsgebieten detektierten Messsignale auf eine Rotationsrichtung der Maschinenkomponente schließen. Dabei ist ein Versatz um ein Viertel einer Winkelperiode bei sinusförmigen Spuren besonders vorteilhaft, da er zu einem besonders deutlichen und daher leicht auswertbaren Versatz der Messsignale führt.

Eine alternative oder zusätzliche Ausgestaltung der Erfindung sieht zwei verschiedene periodische Kreisringspuren vor, die dieselbe Winkelperiode aufweisen und gegeneinander um ein Viertel der Winkelperiode phasenversetzt sind.

Auch dies ermöglicht vorteilhaft die Ermittlung der Rotationsrichtung der Maschinenkomponente durch Auswertung des Versatzes von Messsignalen, die in den beiden gegeneinander versetzten periodischen Kreisringspuren erfasst werden. Auch dabei ist aus den bereits genannten Gründen ein Versatz um ein Viertel der Winkelperiode besonders vorteilhaft.

Eine weitere Weitergestaltung sieht wenigstens eine periodische Kreisringspur vor, deren Winkelperiodenanzahl zu einer Polpaarzahl der elektrischen Maschine korrespondiert.

Eine derartige Kreisringspur eignet sich besonders vorteilhaft zu der Bestimmung einer Stellung einer Maschinenkomponente einer elektrischen Maschine mit einer mehrzahligen Polpaarzahl.

Eine weitere Ausgestaltung der Erfindung sieht vor, dass das Oberflächenprofil wenigstens eine monotone Kreisringspur aufweist, die kreisringförmig und konzentrisch um den Bezugspunkt verläuft und entlang derer sich das Oberflächenprofil bei einem Umlauf um den Bezugspunkt monoton ändert.

Eine derartige monotone Kreisringspur eignet sich ebenfalls zu einer Ermittlung einer Stellung der Maschinenkomponente.

Eine weitere Ausgestaltung der Erfindung sieht vor, dass die Oberflächenstruktur wenigstens eine breitenmodulierte Ringspur aufweist, die entlang einer Kreislinie um den Bezugspunkt verläuft und eine in Abhängigkeit von dem Sektorwinkel periodisch variierende Breite aufweist.

Auch eine Ringspur mit einer periodisch modulierten Breite ermöglicht vorteilhaft ein periodisches Messsignal, aus dessen Frequenz die Rotationsgeschwindigkeit der Maschinenkomponente ermittelt werden kann.

Eine weitere Ausgestaltung der Erfindung sieht vor, dass die Oberflächenstruktur wenigstens eine Licht lenkende Ringspur aufweist, die kreisringförmig und konzentrisch um den Bezugspunkt verläuft und eine Licht reflektierende Oberfläche aufweist, die Licht in von dem Sektorwinkel abhängende Richtungen reflektiert.

Dies ermöglicht oder verbessert insbesondere eine optische Erfassung der Oberflächenstruktur, die in der Regel gegenüber anderen Erfassungsmethoden wie induktiven oder kapazitiven Methoden bevorzugt ist, da optische Sensorvorrichtungen von elektrischen Strömen in der elektrischen Maschine nicht beeinflusst werden.

Eine weitere Ausgestaltung der Erfindung sieht vor, dass die Sensorvorrichtung wenigstens einen optischen und/oder induktiven und/oder kapazitiven Abstandssensor zur Erfassung eines Abstands des Abstandssensors zu der Oberfläche der Oberflächenstruktur in wenigstens einem Erfassungsgebiet aufweist.

Mittels Abstandssensoren kann ein Oberflächenprofil auf einfache Weise durch die Bestimmung von Abständen zu der Oberfläche ermittelt werden. Zudem können vorteilhaft kommerziell verfügbare und kostengünstige optische, induktive und/oder kapazitive Abstandssensoren verwendet werden.

Eine erfindungsgemäße um eine Rotationsachse rotierbare Maschinenkomponente einer elektrischen Maschine weist eine erfindungsgemäße Vorrichtung zur Erfassung eines kinematischen Zustands der Maschinenkomponente mit den oben genannten Vorteilen auf.

Bei dem erfindungsgemäßen Verfahren wird ein kinematischer Zustand einer um eine Rotationsachse rotierbaren Maschinenkomponente einer elektrischen Maschine mittels einer erfindungsgemäßen Vorrichtung erfasst. Dabei wird mittels der Sensorvorrichtung das Oberflächenprofil in wenigstens einem Erfassungsgebiet berührungslos erfasst und mittels der Auswerteeinheit wird anhand des mittels der Sensorvorrichtung in dem wenigstens einen Erfassungsgebiet erfassten Oberflächenprofils ein kinematischer Zustand der Maschinenkomponente ermittelt.

Als kinematischer Zustand wird dabei vorzugsweise eine Rotationsgeschwindigkeit und/oder eine Rotationsrichtung und/oder eine Stellung der Maschinenkomponente erfasst.

Das erfindungsgemäße Verfahren nutzt dabei die genannten Vorteile der erfindungsgemäßen Vorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch einen Ausschnitt einer elektrischen Maschine in einer Schnittdarstellung,
- FIG 2: eine Draufsicht auf eine Oberflächenstruktur mit zwei periodischen Kreisringspuren,
- FIG 3: eine perspektivische Darstellung eines Ausschnitts einer Oberflächenstruktur mit zwei periodischen Kreisringspuren,
- FIG 4: eine Draufsicht auf eine Oberflächenstruktur mit einer periodischen Kreisringspur,
- FIG 5: zeitliche Signalverläufe von Messsignalen,
- FIG 6: eine Draufsicht auf eine Oberflächenstruktur mit breitenmodulierten Ringspuren,
- FIG 7: eine perspektivische Darstellung einer Oberflächenstruktur mit drei periodischen Kreisringspuren,
- FIG 8: einen Ausschnitt einer Oberflächenstruktur mit einer Licht lenkenden Ringspur in einer Schrägperspektive,
- FIG 9: eine schematische Schnittdarstellung einer Maschinenkomponente mit einer Licht lenkenden Ringspur,
- FIG 10: eine schematische Schnittdarstellung eines Ausschnitts einer Maschinenkomponente mit einer Licht lenkenden Ringspur und optische Abstandssensoren,
- FIG 11: eine Draufsicht auf eine Oberflächenstruktur mit einer periodischen Kreisringspur und einer segmentierten Ringspur,
- FIG 12: eine Draufsicht auf eine Oberflächenstruktur mit einer periodischen Kreisringspur und zwei monotonen Kreisringspuren,
- FIG 13: eine Draufsicht auf zwei periodische Kreisringspuren zur Ermittlung der Stellung einer Maschinenkomponente, und
- FIG 14: einen zeitlichen Signalverlauf eines Messsignals.

Einander entsprechende Teile sind in allen Figuren mit den gleichen Bezugszeichen versehen.

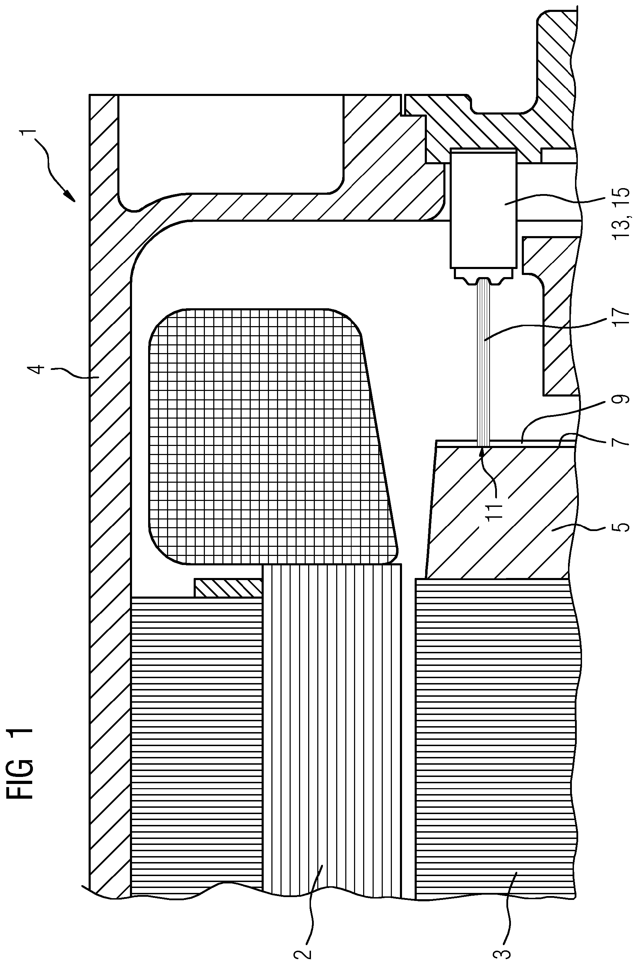

Figur 1 zeigt schematisch einen Ausschnitt einer elektrischen Maschine 1 in einer Schnittdarstellung. Die elektrische Maschine 1 weist einen Stator 2 und eine als Rotor ausgebildete Maschinenkomponente 3 auf, die um eine in der Zeichenebene der Figur 1 liegende (in Figur 1 jedoch nicht dargestellte) Rotationsachse rotierbar gelagert ist. Der Stator 2 und der Rotor befinden sich in einem Gehäuse 4 der elektrischen Maschine 1.

Der Rotor weist einen Kurzschlussring 5 mit einer Stirnfläche 7 auf, die sich in einer zu der Rotationsachse senkrechten Ebene befindet. Die Stirnfläche 7 ist mit einer Oberflächenstruktur 9 versehen, deren Oberflächenprofil in bezüglich der Rotationsachse ortfesten Erfassungsgebieten 11 mittels Abstandssensoren 13 einer Sensorvorrichtung 15 erfasst wird.

In Figur 1 ist ein Abstandssensor 13 dargestellt, der an dem Gehäuse 4 angeordnet und als ein optischer Abstandssensor 13 ausgebildet ist, der Licht 17 in ein Erfassungsgebiet 11 aussendet und von der Oberfläche der Oberflächenstruktur 9 in dem Erfassungsgebiet 11 reflektiertes Licht 17 empfängt. Anhand der von dem optischen Abstandssensor 13 empfangenen Lichtsignale wird mittels einer nicht dargestellten Auswerteeinheit, beispielsweise durch eine Auswertung einer Laufzeit und/oder Intensität des empfangenen Lichts 17, ein Abstand des Abstandssensors 13 zu der in dem Erfassungsgebiet 11 befindlichen Oberfläche der Oberflächenstruktur 9 oder eine zeitliche Änderung dieses Abstands ermittelt. Zusätzlich oder alternativ zu optischen Abstandssensoren 13 können auch induktive und/oder kapazitive Abstandssensoren 13 verwendet werden. Die Abstandssensoren 13 sind beispielsweise in Abständen zwischen etwa 0,1 mm und 10 mm von der Oberflächenstruktur 9 angeordnet.

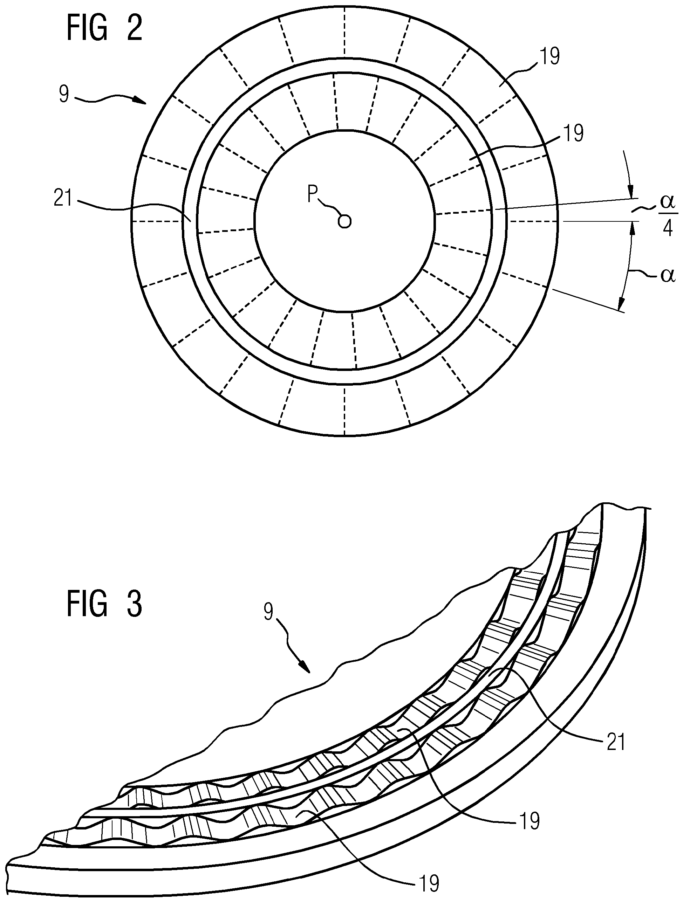

Die Figuren 2 und 3 zeigen jeweils Oberflächenstrukturen 9 erster Ausführungsbeispiele einer Vorrichtung zur Erfassung eines kinematischen Zustands einer um eine Rotationsachse rotierbaren Maschinenkomponente 3 einer elektrischen Maschine 1. Dabei zeigt Figur 2 eine Draufsicht auf eine Oberflächenstruktur 9 und Figur 3 zeigt eine perspektivische Darstellung eines Ausschnitts einer Oberflächenstruktur 9.

Die Oberflächenstruktur 9 weist zwei periodische Kreisringspuren 19 auf, die jeweils kreisringförmig und konzentrisch um einen Bezugspunkt P auf der Rotationsachse verlaufen und durch eine zwischen ihnen verlaufende Trennspur 21 voneinander getrennt sind. Entlang jeder Kreisringspur 19 variiert das Oberflächenprofil periodisch in Abhängigkeit von einem Sektorwinkel, der Richtungen von dem Bezugspunkt P zu Punkten auf einem Umfang der Oberflächenstruktur 9 parametrisiert.

Dabei weisen beide Kreisringspuren 19 dieselbe Winkelperiode α auf, sind jedoch gegeneinander um ein Viertel dieser Winkelperiode α phasenversetzt. Dadurch können mittels einer wiederholten Erfassung der Oberflächenprofile der beiden Kreisringspuren 19 in jeweils wenigstens einem Erfassungsgebiet 11 und einer Auswertung des zeitlichen Verlaufes der erfassten Oberflächenprofile sowohl die Rotationsgeschwindigkeit als auch die Rotationsrichtung einer Rotation der Maschinenkomponente 3 ermittelt werden.

Die Oberflächenprofile der Kreisringspuren 19 variieren dabei vorzugsweise wenigstens annähernd sinusförmig in Abhängigkeit von dem Sektorwinkel. Besonders bevorzugt variieren die Oberflächenprofile derart, dass sie zu möglichst oberwellenfreien Messsignalen der Abstandssensoren 13 führen. Zur Erzielung derart optimierter Messsignale der Abstandssensoren 13 können bei der Gestaltung der Oberflächenprofile der Kreisringspuren 19 abstandsabhängige Messempfindlichkeiten der Abstandssensoren 13 berücksichtigt und ausgeglichen werden. Beispielsweise wird ein Oberflächenprofil derart gestaltet, dass das Messsignal eines Abstandssensors 13 bei gleichförmiger Rotation der Maschinenkomponente 3 wenigstens annähernd sinusförmig ist.

Die Erfassungsgebiete 11 erstrecken sich vorzugsweise jeweils über den Bereich etwa einer Winkelperiode a. Die periodischen Kreisringspuren 19 weisen vorzugsweise jeweils eine Modulationstiefe von etwa 2 mm und bis zu etwa 80 Perioden auf. Die Oberflächenstruktur 9 hat beispielsweise einen Radius von etwa 60 mm.

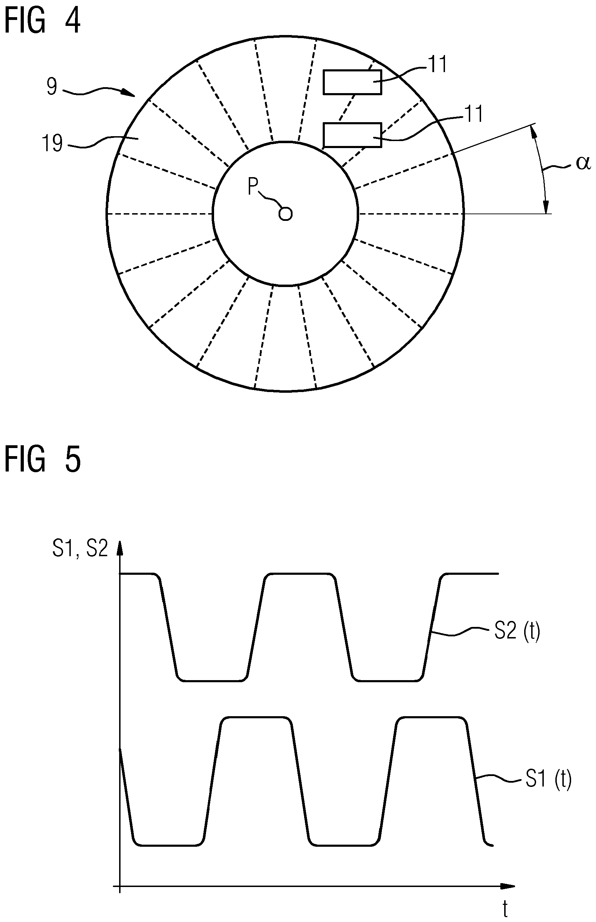

Figur 4 zeigt schematisch eine Draufsicht auf eine Oberflächenstruktur 9 eines zweiten Ausführungsbeispiels einer Vorrichtung zur Erfassung eines kinematischen Zustands einer um eine Rotationsachse rotierbaren Maschinenkomponente 3 einer elektrischen Maschine 1. Im Unterschied zu den in den Figuren 1 und 2 dargestellten Ausführungsbeispielen weist die Oberflächenstruktur 9 dieses Ausführungsbeispiels nur eine periodische Kreisringspur 19 auf, die im Prinzip wie jede der in den Figuren 1 und 2 dargestellten und oben beschriebenen periodischen Kreisringspuren 19 ausgeführt sein kann, jedoch im Allgemeinen breiter als diese gestaltet ist. In dem Gebiet der periodischen Kreisringspur 19 liegen wenigstens zwei voneinander getrennte Erfassungsgebiete 11, die unterschiedliche Abstände zu dem Bezugspunkt P aufweisen und um ein Viertel der Winkelperiode α der Kreisringspur 19 gegeneinander versetzt sind.

Figur 5 zeigt schematisch Signalverläufe Sl(t), S2(t) von Messsignalen S1, S2 in Abhängigkeit von einer Zeit t. Die Messsignale S1, S2 werden in den beiden in Figur 4 dargestellten Erfassungsgebieten 11 mittels jeweils eines Abstandssensors 13 bei einer gleichförmigen Rotation der Maschinenkomponente 3 erfasst. Dabei wird ein erstes Messsignal S1 in dem näher an dem Bezugspunkt P gelegenen Erfassungsgebiet 11 erfasst und das zweite Messsignal S2 wird in dem weiter von dem Bezugspunkt P entfernten Erfassungsgebiet 11 erfasst. Aus der Periodendauer oder Frequenz der Signalverläufe Sl(t), S2(t) wird die Rotationsgeschwindigkeit der Rotation der Maschinenkomponente 3 ermittelt, aus dem zeitlichen Versatz der Signalverläufe Sl(t), S2(t) wird die Rotationsrichtung dieser Rotation ermittelt.

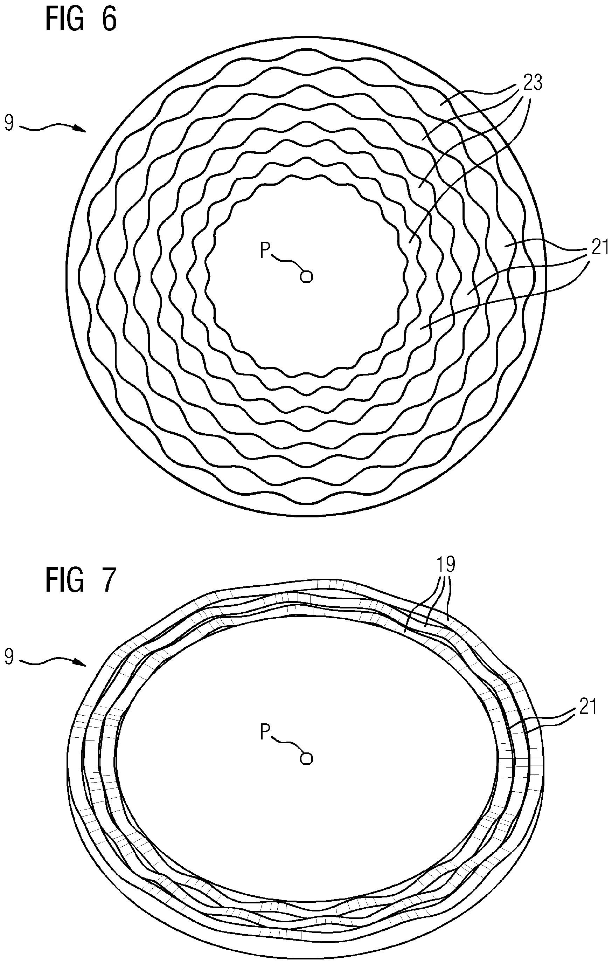

Figur 6 zeigt schematisch eine Draufsicht auf eine Oberflächenstruktur 9 eines dritten Ausführungsbeispiels einer Vorrichtung zur Erfassung eines kinematischen Zustands einer um eine Rotationsachse rotierbaren Maschinenkomponente 3 einer elektrischen Maschine 1. Diese Oberflächenstruktur 9 weist mehrere breitenmodulierte Ringspuren 23 auf, die jeweils entlang einer Kreislinie um einen Bezugspunkt P auf der Rotationsachse verlaufen und eine in Abhängigkeit von dem Sektorwinkel periodisch variierende Breite aufweisen. Die breitenmodulierten Ringspuren 23 sind durch Trennspuren 21 voneinander getrennt und sind gegenüber den Trennspuren 21 um eine Stufenhöhe von beispielsweise etwa 2 mm abgestuft.

Figur 7 zeigt schematisch eine perspektivische Darstellung einer Oberflächenstruktur 9 eines vierten Ausführungsbeispiels einer Vorrichtung zur Erfassung eines kinematischen Zustands einer um eine Rotationsachse rotierbaren Maschinenkomponente 3 einer elektrischen Maschine 1. Diese Oberflächenstruktur 9 weist mehrere periodische Kreisringspuren 19 auf, die jeweils kreisringförmig und konzentrisch um einen Bezugspunkt P auf der Rotationsachse verlaufen und durch Trennspuren 21 voneinander getrennt sind. Jede dieser Kreisringspuren 19 ist wie eine der in den Figuren 2 und 3 dargestellten und oben anhand dieser Figuren beschriebenen Kreisringspuren 19 ausgebildet, wobei sich im Unterschied zu den in den Figuren 2 und 3 dargestellten Ausführungsbeispielen die Winkelperioden α der einzelnen Kreisringspuren 19 voneinander unterscheiden. Dadurch kann vorteilhaft ein Noniusprinzip zu einer genaueren und zuverlässigeren Bestimmung der Rotationsgeschwindigkeit, sowie bei Ausprägung der Periodenzahl einer der Kreisringspuren 19 als zur Polpaarzahl der elektrischen Maschine 1 korrespondierend zur Ermittlung einer Stellung der Maschinenkomponente 3, mindestens in Relation zur elektrischen Phase, d.h. zum Zwecke der phasenrichtigen Regelung oder Ansteuerung der elektrischen Maschine 1, realisiert werden.

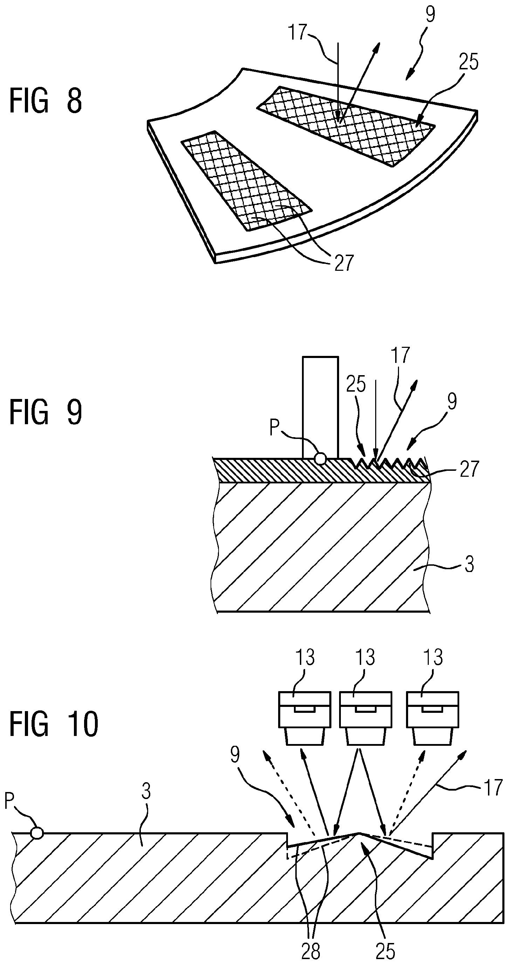

Die Figuren 8 bis 10 zeigen schematisch Oberflächenstrukturen 9 eines fünften Ausführungsbeispiels einer Vorrichtung zur Erfassung eines kinematischen Zustands einer um eine Rotationsachse rotierbaren Maschinenkomponente 3 einer elektrischen Maschine 1. Diese Oberflächenstrukturen 9 weisen wenigstens eine Licht 17 lenkende Ringspur 25 auf, die kreisringförmig und konzentrisch um einen Bezugspunkt P auf der Rotationsachse verläuft und eine Licht 17 reflektierende Oberfläche aufweist, die Licht 17 in von einem Sektorwinkel abhängende Richtungen reflektiert. Figur 8 zeigt schematisch einen Ausschnitt einer Licht 17 lenkenden Ringspur 25 in einer Schrägperspektive. Figur 9 zeigt eine schematische Schnittdarstellung einer Maschinenkomponente 3 mit einer Licht 17 lenkenden Ringspur 25. Figur 10 zeigt eine schematische Schnittdarstellung eines Ausschnitts einer Maschinenkomponente 3 mit einer Licht 17 lenkenden Ringspur 25 und optische Abstandssensoren 13 einer Sensorvorrichtung 15.

Die Licht 17 lenkende Ringspur 25 kann zur Lichtablenkung beispielsweise in den Figuren 8 und 9 schematisch dargestellte Mikroprismen 27 aufweisen. Zusätzlich oder alternativ zu Mikroprismen 27 können Gitterstrukturen zur Lichtbeugung oder eine geeignete Beschichtung verwendet werden. Figur 10 zeigt eine Licht 17 lenkende Ringspur 25 mit gegeneinander verkippten Reflektionsflächen 28, wobei die Verkippung in Abhängigkeit von dem Sektorwinkel variiert (die in Figur 10 gestrichtelt angedeuteten Reflektionsflächen 28 befinden sich in einer zu der Zeichenebene versetzten Schnittebene). Vorzugsweise variiert die Verkippung der Reflektionsflächen 28 in Abhängigkeit von dem Sektorwinkel derart, dass sich die von den optischen Abstandssensoren 13 erfasste Lichtintensität bei gleichförmiger Rotation der Maschinenkomponente 3 sinusförmig ändert.

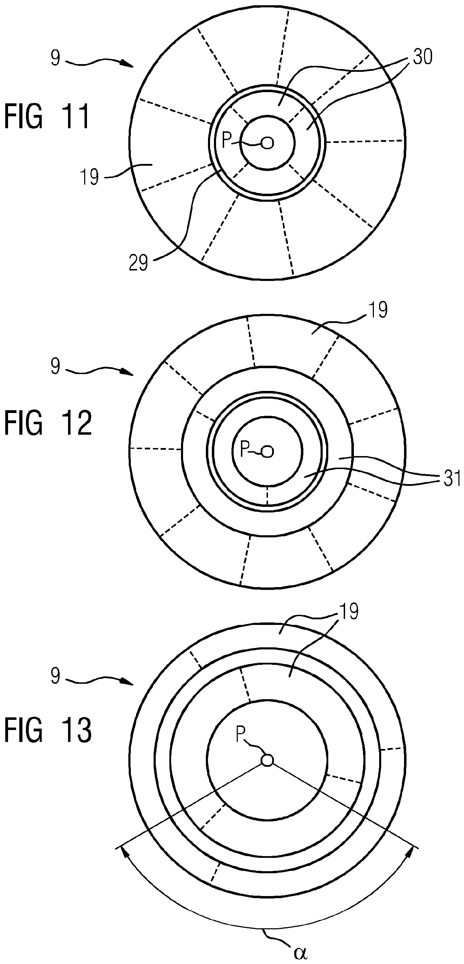

Figur 11 zeigt schematisch eine Draufsicht auf eine Oberflächenstruktur 9 eines sechsten Ausführungsbeispiels einer Vorrichtung zur Erfassung eines kinematischen Zustands einer um eine Rotationsachse rotierbaren Maschinenkomponente 3 einer elektrischen Maschine 1. Diese Oberflächenstruktur 9 weist eine periodische Kreisringspur 19 auf, die wie die in Figur 4 dargestellte periodische Kreisringspur 19 ausgebildet ist. Innerhalb dieser periodischen Kreisringspur 19 ist eine segmentierte Ringspur 29 angeordnet, die mehrere (in dem dargestellten Beispiel vier) Segmente 30 aufweist. In den einzelnen Segmenten 30 ist das Oberflächenprofil jeweils konstant. Die Oberflächenprofile der Segmente 30 sind jedoch gegeneinander abgestuft, beispielsweise um eine Höhenstufen zwischen etwa 0,5 mm und 2 mmm.

Durch eine Erfassung und Auswertung des Oberflächenprofils in einem Erfassungsgebiet 11, das in dem Gebiet der segmentierten Ringspur 29 liegt, wird (grob) eine Stellung der Maschinenkomponente 3 ermittelt. Die periodische Kreisringspur 19 dient der Ermittlung der Rotationsgeschwindigkeit und Rotationsrichtung entsprechend der obigen Beschreibung der Figuren 4 und 5.

Figur 12 zeigt schematisch eine Draufsicht auf eine Oberflächenstruktur 9 eines siebten Ausführungsbeispiels einer Vorrichtung zur Erfassung eines kinematischen Zustands einer um eine Rotationsachse rotierbaren Maschinenkomponente 3 einer elektrischen Maschine 1. Auch diese Oberflächenstruktur 9 weist eine periodische Kreisringspur 19 auf, die wie die in Figur 4 dargestellte periodische Kreisringspur 19 ausgebildet ist. Innerhalb dieser periodischen Kreisringspur 19 liegen jedoch an Stelle der in Figur 11 dargestellten segmentierten Ringspur 29 zwei voneinander getrennte monotone Kreisringspuren 31, die jeweils kreisringförmig und konzentrisch um den Bezugspunkt P verlaufen und entlang derer sich das Oberflächenprofil bei einem Umlauf um den Bezugspunkt P jeweils monoton, beispielsweise linear, ändert. Dabei ändern sich die Oberflächenprofile der beiden monotonen Kreisringspuren 31 gegensinnig zueinander, wodurch die asymmetrischen Massenverteilungen der monotonen Kreisringspuren 31 wenigstens teilweise kompensiert werden.

Durch eine Erfassung und Auswertung des Oberflächenprofils in wenigstens einem Erfassungsgebiet 11, das in dem Gebiet einer monotonen Kreisringspur 31 liegt, wird eine Stellung der Maschinenkomponente 3 ermittelt. Die periodische Kreisringspur 19 dient wiederum der Ermittlung der Rotationsgeschwindigkeit und Rotationsrichtung entsprechend der obigen Beschreibung der Figuren 4 und 5.

Figur 13 zeigt zwei periodische Kreisringspuren 19, die alternativ zu der in Figur 11 dargestellten segmentierten Ringspur 29 oder den in Figur 12 dargestellten monotonen Kreisringspuren 31 zur Ermittlung einer Stellung der Maschinenkomponente 3 einer elektrischen Maschine 1 verwendet werden können. Die beiden in Figur 13 dargestellten periodischen Kreisringspuren 19 sind analog zu den in Figur 2 dargestellten periodische Kreisringspuren 19 ausgebildet, weisen jedoch eine wesentlich größere Winkelperiode α als Letztere auf. Vorzugsweise korrespondiert diese Winkelperiode α zu einer Polpaarzahl der elektrischen Maschine 1, so dass die Winkelperiodenanzahl jeder der periodischen Kreisringspuren 19 mit der Polpaarzahl oder einem Vielfachen der Polpaarzahl der elektrischen Maschine 1 übereinstimmt. Im in Figur 13 dargestellten Beispiel weist jede periodische Kreisringspur 19 eine Winkelperiode α von 120° auf, die zur Polpaarzahl Drei korrespondiert.

Die in Figur 11 dargestellte segmentierte Ringspur 29, die in Figur 12 dargestellten monotonen Kreisringspuren 31 und die in Figur 13 dargestellten periodischen Kreisringspuren 19 zur Erfassung einer Stellung der Maschinenkomponente 3 können jeweils statt mit einer einzelnen periodischen Kreisringspur 19 zur Erfassung der Rotationsgeschwindigkeit und Rotationsrichtung auch mit mehreren derartigen periodischen Kreisringspuren 19 entsprechend der obigen Beschreibung der Figuren 2 o- der 3 kombiniert werden. Dabei können die Ringspuren 29, 31, 19 zur Erfassung der Stellung der Maschinenkomponente 3 jeweils innerhalb, außerhalb oder zwischen periodischen Kreisringspuren 19 zur Erfassung der Rotationsgeschwindigkeit und Rotationsrichtung angeordnet werden. Bei einer Anordnung wenigstens einer Ringspur 29, 31, 19 zur Erfassung der Stellung der Maschinenkomponente 3 zwischen zwei periodischen Kreisringspuren 19 zur Erfassung der Rotationsgeschwindigkeit und Rotationsrichtung kann eine zusätzliche Trennspur 21 entfallen, da die Ringspur 29, 31, 19 zur Stellungserfassung die Funktion einer Trennspur 21 übernehmen kann.

Alternativ oder zusätzlich kann wenigstens eine periodische Kreisringspur 19 zur Erfassung der Rotationsgeschwindigkeit und Rotationsrichtung einer Ringspur 29, 31, 19 zur Stellungserfassung überlagert werden. Das daraus resultierende Oberflächenprofil kann zur Erfassung sowohl der Rotationsgeschwindigkeit und Rotationsrichtung als auch der Stellung der Maschinenkomponente 3 verwendet werden.

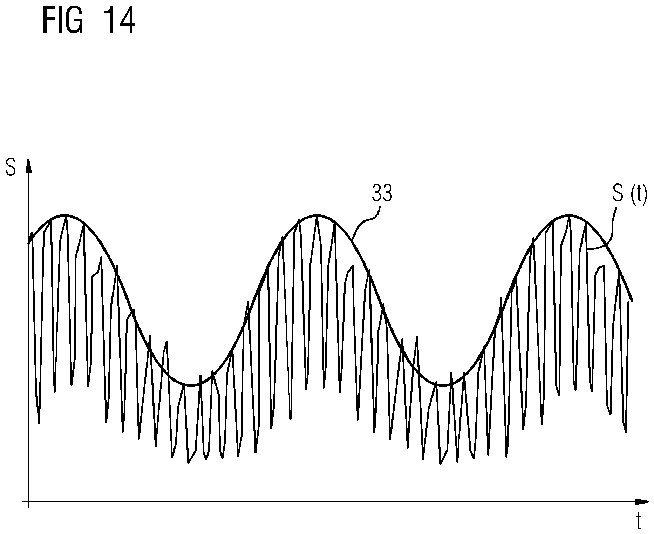

Figur 14 zeigt beispielsweise schematisch einen zeitlichen Signalverlauf S(t) eines Messsignals S für ein Oberflächenprofil, das sich aus der Überlagerung einer langwelligen periodischen Kreisringspur 19 gemäß Figur 13 mit einer deutlich kurzwelligeren periodischen Kreisringspur 19 gemäß einer der Figuren 2 bis 4 ergibt. Der Signalverlauf S(t) weist daher eine Einhüllende 33 auf, die eine wesentliche geringere Frequenz als das Messsignal S selbst aufweist. Die Frequenz der Einhüllenden 33 kann zur Ermittlung einer Stellung der Maschinenkomponente 3 verwendet werden, während die Frequenz des Messsignals S zur Ermittlung der Rotationsgeschwindigkeit verwendet werden kann.

Alle oben beschriebenen Ausführungsbeispiele können dahingehend weitergestaltet werden, dass die Erfassung wenigstens eines Referenzsignals vorgesehen wird, mittels dessen wenigstens eine Signaleigenschaft der erfassten Messsignale S, S1, S2, beispielsweise eine reflexionsabhängige Lichtintensität im Falle optischer Abstandssensoren, referenziert und zur Auswertung und/oder Optimierung der Erfassung des kinematischen Zustands der Maschinenkomponente 3 verwendet wird, beispielsweise zur Kompensation räumlicher und/oder zeitlicher Variationen des Reflexionsgrades der Oberflächenstruktur 9 infolge von Temperaturunterschieden, Verschmutzungen oder Abnutzungen.

Ein Referenzsignal kann beispielsweise auf einer zusätzlichen Spur, entlang derer das Oberflächenprofil nicht variiert, oder auf einer Trennspur 21 erfasst werden. Alternativ oder zusätzlich kann ein Referenzsignal auf einer periodischen Kreisringspur 19 erfasst werden, wobei das Erfassungsgebiet 11 für das Referenzsignal deutlich größer als ein einer Winkelperiode α entsprechendes Gebiet ausgebildet ist.

## Patentansprüche

1. Vorrichtung zur Erfassung eines kinematischen Zustands einer um eine Rotationsachse rotierbaren Maschinenkomponente (3) einer elektrischen Maschine (1), umfassend
- eine fest an der Maschinenkomponente (3) angeordnete oder der Maschinenkomponente (3) eingeprägte Oberflächenstruktur (9), die kreisringförmig und konzentrisch um einen Bezugspunkt (P) auf der Rotationsachse verläuft und ein Oberflächenprofil aufweist, das in Abhängigkeit von einem Sektorwinkel, der Richtungen von dem Bezugspunkt (P) zu Punkten auf einem Umfang der Oberflächenstruktur (9) parametrisiert, und/oder von einem Abstand von dem Bezugspunkt (P) variiert,
- eine Sensorvorrichtung (15) zur berührungslosen Erfassung des Oberflächenprofils in wenigstens einem bezüglich der Rotationsachse ortfesten Erfassungsgebiet (11),
- und eine Auswerteeinheit zur Bestimmung des kinematischen Zustands der Maschinenkomponente (3) anhand des mittels der Sensorvorrichtung (15) in dem wenigstens einen Erfassungsgebiet (11) erfassten Oberflächenprofils,
- wobei das Oberflächenprofil wenigstens eine periodische Kreisringspur (19) aufweist, die kreisringförmig und konzentrisch um den Bezugspunkt (P) verläuft und entlang derer das Oberflächenprofil in Abhängigkeit von dem Sektorwinkel periodisch mit einer Winkelperiode (α) der periodischen Kreisringspur (19) variiert, und das Oberflächenprofil wenigstens einer periodischen Kreisringspur (19) sinusförmig mit dem Sektorwinkel variiert, **dadurch gekennzeichnet, daß** in dem Gebiet wenigstens einer periodischen Kreisringspur (19) zwei Erfassungsgebiete (11) liegen, die unterschiedliche Abstände zu dem Bezugspunkt (P) aufweisen und um ein Viertel der Winkelperiode (α) der periodischen Kreisringspur (19) gegeneinander versetzt sind, und/oder das Oberflächenprofil wenigstens zwei verschiedene periodische Kreisringspuren (19) aufweist, die dieselbe Winkelperiode (α) aufweisen und gegeneinander um ein Viertel der Winkelperiode (α) phasenversetzt sind

2. Vorrichtung nach Anspruch 1,
**gekennzeichnet durch** wenigstens eine periodische Kreisringspur (19), deren Winkelperiodenanzahl zu einer Polpaarzahl der elektrischen Maschine (1) korrespondiert.

3. Vorrichtung nach einem der vorhergehenden Ansprüche, **dadurch gekennzeichnet, dass** das Oberflächenprofil wenigstens eine monotone Kreisringspur (31) aufweist, die kreisringförmig und konzentrisch um den Bezugspunkt (P) verläuft und entlang derer sich das Oberflächenprofil bei einem Umlauf um den Bezugspunkt (P) monoton ändert.

4. Vorrichtung nach einem der vorhergehenden Ansprüche, **dadurch gekennzeichnet, dass** die Oberflächenstruktur (9) wenigstens eine breitenmodulierte Ringspur (23) aufweist, die entlang einer Kreislinie um den Bezugspunkt (P) verläuft und eine in Abhängigkeit von dem Sektorwinkel periodisch variierende Breite aufweist.

5. Vorrichtung nach einem der vorhergehenden Ansprüche, **dadurch gekennzeichnet, dass** die Oberflächenstruktur (9) wenigstens eine Licht (17) lenkende Ringspur (25) aufweist, die kreisringförmig und konzentrisch um den Bezugspunkt (P) verläuft und eine Licht (17) reflektierende Oberfläche aufweist, die Licht (17) in von dem Sektorwinkel abhängende Richtungen reflektiert.

6. Vorrichtung nach einem der vorhergehenden Ansprüche, **dadurch gekennzeichnet, dass** die Sensorvorrichtung (15) wenigstens einen optischen und/oder induktiven und/oder kapazitiven Abstandssensor (13) zur Erfassung eines Abstands des Abstandssensors (13) von der Oberfläche der Oberflächenstruktur (9) in wenigstens einem Erfassungsgebiet (11) aufweist.

7. Um eine Rotationsachse rotierbare Maschinenkomponente (3) einer elektrischen Maschine (1) mit einer Vorrichtung nach einem der vorhergehenden Ansprüche zur Erfassung eines kinematischen Zustands der Maschinenkomponente (3).

8. Verfahren zur Erfassung eines kinematischen Zustands einer um eine Rotationsachse rotierbaren Maschinenkomponente (3) einer elektrischen Maschine (1) mittels einer Vorrichtung nach einem der Ansprüche 1 bis 6, wobei
- mittels der Sensorvorrichtung (15) das Oberflächenprofil in wenigstens einem Erfassungsgebiet (11) berührungslos erfasst wird
- und mittels der Auswerteeinheit anhand des mittels der Sensorvorrichtung (15) in dem wenigstens einen Erfassungsgebiet (11) erfassten Oberflächenprofils ein kinematischer Zustand der Maschinenkomponente (3) ermittelt wird.

9. Verfahren nach Anspruch 8,
**dadurch gekennzeichnet, dass** als kinematischer Zustand eine Rotationsgeschwindigkeit und/oder eine Rotationsrichtung und/oder eine Stellung der Maschinenkomponente (3) erfasst wird.

## Claims

1. Apparatus for detecting a kinematic state of a machine component (3), which can rotate about an axis of rotation, of an electric machine (1), comprising
- a surface structure (9), which is arranged on the machine component (3) in a fixed manner or impressed onto the machine component (3), runs concentrically about a reference point (P) on the axis of rotation and has a surface profile which varies as a function of a sector angle, which parameterises directions from the reference point (P) towards points on a periphery of the surface structure (9), and/or a distance from the reference point (P),
- a sensor apparatus (15) for detecting the surface profile in a contactless manner in at least one detection area (11) at a fixed position in relation to the axis of rotation,
- and an evaluation unit for determining the kinematic state of the machine component (3) on the basis of the surface profile detected by means of the sensor apparatus (15) in the at least one detection area (11),
- wherein the surface profile has at least one periodic circular ring track (19), which runs in the shape of a circular ring and concentrically about the reference point (P) and along which the surface profile varies periodically as a function of the sector angle with an angular period (α) of the periodic circular ring track (19), and the surface profile of at least one periodic circular ring track (19) varies sinusoidally with the sector angle,
**characterised in that**
in the area of at least one periodic circular ring track (19), there are two detection areas (11), which have different distances from the reference point (P) and are offset in relation to one another by a quarter of the angular period (α) of the periodic circular ring track (19), and/or the surface profile has at least two different periodic circular ring tracks (19), which have the same angular period (α) and are phase-offset in relation to one another by a quarter of the angular period (α).

2. Apparatus according to claim 1,
**characterised by** at least one periodic circular ring track (19), the number of angular periods of which corresponds to a number of pole pairs of the electric machine (1).

3. Apparatus according to one of the preceding claims, **characterised in that** the surface profile has at least one monotonic circular ring track (31), which runs in the shape of a circular ring and concentrically about the reference point (P) and along which the surface profile changes monotonically on one revolution about the reference point (P).

4. Apparatus according to one of the preceding claims, **characterised in that** the surface structure (9) has at least one width-modulated ring track (23), which runs along a circular line about the reference point (P) and has a width that varies periodically as a function of the sector angle.

5. Apparatus according to one of the preceding claims, **characterised in that** the surface structure (9) has at least one ring track (25) that conducts light (17), runs in the shape of a circular ring and concentrically about the reference point (P) and has a surface that reflects light (17), which reflects light (17) in directions as a function of the sector angle.

6. Apparatus according to one of the preceding claims, **characterised in that** the sensor apparatus (15) has at least one optical and/or inductive and/or capacitive distance sensor (13) for detecting a distance of the distance sensor (13) from the surface of the surface structure (9) in at least one detection area (11).

7. Machine component (3), which can rotate about an axis of rotation, of an electric machine (1) with an apparatus according to one of the preceding claims for detecting a kinematic state of the machine component (3).

8. Method for detecting a kinematic state of a machine component (3), which can rotate about an axis of rotation, of an electrical machine (1) by means of an apparatus according to one of claims 1 to 6, wherein
- the surface profile in at least one detection area (11) is detected in a contactless manner by means of the sensor apparatus (15)
- and a kinematic state of the machine component (3) is ascertained by means of the evaluation unit on the basis of the surface profile detected in the at least one detection area (11) by means of the sensor apparatus (15).

9. Method according to claim 8,
**characterised in that** a rotational speed and/or a direction of rotation and/or a position of the machine component (3) is detected as kinematic state.

## Revendications

1. Dispositif de détection d'un état cinématique d'un composant (3) de machine tournant autour d'un axe de rotation d'une machine (1) électrique, comprenant
- une structure (9) de surface disposée fixement sur le composant (3) de la machine ou incrustée dans le composant (3) de la machine, qui s'étend en forme d'anneau de cercle et concentriquement autour d'un point (P) de référence sur l'axe de rotation et qui a un profil de surface, qui varie en fonction d'un angle sectoriel, qui paramétrise des directions du point (P) de référence par rapport à des points sur un pourtour de la structure (9) de surface, et/ou varie en fonction d'une distance au point (P) de référence,
- un dispositif (15) capteur, pour le relevé sans contact du profil de surface, dans au moins une région (11) de relevé fixe en position par rapport à l'axe de rotation,
- et une unité d'exploitation pour la détermination de l'état cinématique du composant (3) de la machine, à l'aide du profil de surface relevé, au moyen du dispositif (15) capteur, dans la au moins une région (11) de relevé,
- dans lequel le profil de surface a au moins une trace (19) annulaire circulaire périodique, qui s'étend en forme d'anneau de cercle et concentriquement autour du point (P) de référence et le long de laquelle le profil de surface varie en fonction de l'angle sectoriel périodiquement avec une période (α) angulaire de la trace (19) annulaire circulaire périodique, et le profil de surface d'au moins une trace (19) annulaire circulaire périodique varie sinusoïdalement avec l'angle sectoriel,
**caractérisé en ce que**
dans la région d'au moins une trace (19) annulaire circulaire, il y a deux régions (11) de relevé, qui ont des distances différentes au point (P) de référence et qui sont décalées les unes par rapport aux autres d'un quart de la période (α) angulaire de la trace (19) annulaire circulaire et/ou le profil de surface a au moins deux traces (19) annulaires circulaires périodiques différentes, qui ont la même période (α) angulaire et qui sont déphasées les unes par rapport aux autres d'un quart de la période (α) angulaire.

2. Dispositif suivant la revendication 1,
**caractérisé par** au moins une trace (19) annulaire circulaire périodique, dont le nombre de périodes angulaires correspond à un nombre de paires de pôles de la machine (1) électrique.

3. Dispositif suivant l'une des revendications précédentes, **caractérisé en ce que** le profil de surface a au moins une trace (31) annulaire circulaire monotone, qui s'étend en forme d'anneau de cercle et concentriquement autour du point (P) de référence et le long de laquelle le profil de surface se modifie de manière monotone, lors d'un tour autour du point (P) de référence.

4. Dispositif suivant l'une des revendications précédentes, **caractérisé en ce que** la structure (9) de surface a au moins une trace (23) annulaire modulée en largeur, qui s'étend le long d'une ligne circulaire autour du point (P) de référence et a une largeur variant périodiquement en fonction de l'angle sectoriel.

5. Dispositif suivant l'une des revendications précédentes, **caractérisé en ce que** la structure (9) de surface a au moins une trace (25) annulaire dirigeant une lumière (17), qui s'étend en forme d'anneau de cercle et concentriquement autour du point (P) de référence et a une surface réfléchissant la lumière (17), qui réfléchit la lumière (17) dans des directions qui dépendent de l'angle sectoriel.

6. Dispositif suivant l'une des revendications précédentes, **caractérisé en ce que** le dispositif (15) capteur a, dans au moins une région (11) de relevé, au moins un capteur (13) de distance optique et/ou inductif et/ou capacitif de relevé d'une distance du capteur (13) de distance à la surface de la structure (9) de surface.

7. Composant (3) tournant autour d'un axe de rotation d'une machine (1) électrique ayant un dispositif suivant l'une des revendications précédentes pour le relevé d'un état cinématique du composant (3) de la machine.

8. Procédé de relevé d'un état cinématique d'un composant (3) tournant autour d'un axe de rotation d'une machine (1) électrique au moyen d'un dispositif suivant l'une des revendications 1 à 6, dans lequel
- on relève sans contact, dans au moins une région (11) de relevé, le profil de surface au moyen du dispositif (15) capteur
- et au moyen de l'unité d'exploitation, à l'aide du profil de surface relevé au moyen du dispositif (15) capteur dans la au moins une région (11) de relevé, on détermine un état cinématique du composant (3) de la machine.

9. Procédé suivant la revendication 8,
**caractérisé en ce que** l'on relève, comme état cinématique, une vitesse de rotation et/ou un sens de rotation et/ou une position du composant (3) de machine.
